# EUROPÄISCHE PATENTANMELDUNG

(11) **EP 0 710 497 A1**
(43) Veröffentlichungstag der Anmeldung: **08.05.1996**
(21) Anmeldenummer: 95116710.5
(22) Anmeldetag: 24.10.1995
(51) Int. Cl.: B01D 21/24, E01H 1/08, B65F 9/00

(54) **Umladeeinrichtung mit Entwässerungsvorrichtung für Schüttgut und Verfahren zur Entwässerung**

(30) Priorität: 02.11.1994 DE 4439071
(71) Anmelder: Firma Gisela Rieger, D-04157 Leipzig (DE)
(72) Erfinder: Rieger, Florian, D-04157 Leipzig (DE); Rieger, Lydia, D-04157 Leipzig (DE)

(57) **Zusammenfassung**

Umladeeinrichtung mit Entwässerungsvorrichtung für Schüttgut und Verfahren zur Entwässerung, vorzugsweise für auf öffentlichen Verkehrswegen anfallendes Kehrgut. Das Wesen der Erfindung besteht darin, daß das von einem Straßenkehrfahrzeug aufgenommene, oft nasse Kehrgut, in die Umladeeinrichtung entladen und dort erforderlichenfalls entwässert wird, bevor es in einen das mehrfache Volumen fassenden Rollcontainer gelangt. Danach erfolgt dessen Einlagerung in einem einzigen Transportvorgang auf der Deponie. Das dem Kehrgut entzogene, meist schadstoffbelastete Wasser wird umweltschonend entsorgt.

## Beschreibung

Umladeeinrichtung mit Entwässerungsvorrichtung für Schüttgut und Verfahren zur Entwässerung.

Die Erfindung betrifft eine mit einer Entwässerungsvorrichtung versehene Umladeeinrichtung für Schüttgut, vorzugsweise für Bauschutt und anfallendes Kehrgut von öffentlichen Verkehrswegen sowie das dazu gehörige Verfahren der Entwässerung.
Angewendet wird die Erfindung insbesondere im Zuge der Straßenreinigung in der Kommunen, indem das meist durch ein Straßenkehrfahrzeug aufgenommene Kehrgut in die erfindungsgemäße Umladeeinrichtung umgefüllt, dort entwässert und schließlich in einen bereitstehenden großvolumigen Rollcontainer entleert wird. Von dort aus kann das auf diese Weise entwässerte Kehrgut alsdann problemlos auf eine geeignete Deponie transportiert werden.

Bekannt ist die von den meisten Kommunen praktizierte Verfahrensweise der Entsorgung des aus den öffentlichen Verkehrswegen zusammengetragenen Kehrgutes, bei der das von dem Straßenkehrfahrzeug aufgenommene Kehrgut auf direktem Wege zu einer dem jeweils zu reinigenden Straßennetz zugeordneten Deponie transportiert wird.
Der Nachteil dieser bisher vielerorts üblichen Verfahrensweise besteht darin, daß das Aufsuchen der Deponie durch ein einzelnes Fahrzeug erfolgt, unabhängig davon, ob dieses Überbringerfahrzeug optimal ausgelastet ist oder nicht. Derartige Einzelfahrten sind daher mitverantwortlich für die hohe Verkehrsdichte in den Städten und Gemeinden, einhergehend mit einem dementsprechenden Mehrverbrauch an Kraftstoff.
Ein weiterer Nachteil ist die Umweltbelastung als Folge des unkontrolliert hohen und eine unbekannte Menge verschiedenster Schadstoffe enthaltenden Wasseranteils des Kehrgutes. Die Art und Zusammensetzung der im Wasser gelösten und auf diese Weise auf die Deponie gelangenden Schadstoffe bleibt somit weitestgehend unbekannt und eine die Umwelt entlastende Entsorgung dieser Schadstoffe wird von vorn herein verhindert. Nachteilig ist letztendlich auch, daß der das Gewicht des Kehrgutes erhöhende Wasseranteil die Kosten des einzelnen Transport- bzw. Einlagerungsvorganges beträchtlich erhöht.

Ziel der Erfindung ist es, Schüttgut, hier insbesondere das von öffentlichen Verkehrswegen mittels Straßenkehrfahrzeug zusammengetragene Kehrgut, vor dessen Deponierung zu entwässern, wobei sowohl Kehrgut mit hohem Wasseranteil (über 20 %) als auch Kehrgut mit geringem Wasseranteil wirkungsvoll entwässert werden soll.
Weiterhin soll das Kehrgut nach seiner Entwässerung in einem den Inhalt mehrerer Straßenkehrfahrzeuge aufnehmenden Rollcontainer zwischengelagert werden, bevor es auf die Deponie gelangt.

Erfindungsgemäß wird diese Ziel dadurch erreicht, daß ein Verfahren zur Anwendung gelangt, bei dem das einzelne Straßenkehrfahrzeug zunächst in bekannter Weise den Verkehrsweg reinigt und dabei das Kehrgut, ganz gleich ob trocken oder mit Regenwasser vermengt, aufnimmt.
Alsdann wird das Kehrgut in die nachfolgend im einzelnen noch zu beschreibende erfinderische Umladeeinrichtung entleert, in der, falls erforderlich, die Entwässerung des Kehrgutes erfolgt. Danach wird das Kehrgut in einen das mehrfache des Fassungsvermögens eines Straßenkehrfahrzeuges aufnehmenden Rollcontainer gefüllt. Erst wenn das Fassungsvermögen des Rollcontainers annähernd erschöpft ist, erfolgt der Transport desselben zur Deponie.
Ein Wesensmerkmal des beschriebenen Verfahrens stellt dabei die Verwendung der in erfinderischer Weise gestalteten und vorstehend erwähnten Umladeeinrichtung dar.

Diese Umladeeinrichtung besteht aus einem im Prinzip containerartigen, nach oben hin offenen kastenförmigen Behälter, dessen Boden glattflächig ausgebildet ist und zu etwa einem Drittel seiner Länge mit dem größeren Teil der Bodenfläche einen Winkel von etwa 120 Grad bildet. Die einzige sirnseitig angeordnete Wand des kastenförmigen Behälters ist in der Weise als bewegliche Klappe ausgebildet, daß diese in ihrem oberen Bereich an einer den kastenförmigen Behälter quer durchlaufenden, die Seitenwände desselben auf Abstand haltenden Traverse gelagert ist. Etwa mittig des kastenförmigen Behälters ist nahe dessen Oberkante eine weitere, nahezu identische Traverse angeordnet, auf der die Lagerböcke für -in der Regel zwei- hydraulische Arbeitszylinder in der Weise aufgesetzt sind, daß die beiden Arbeitszylinder in Längsrichtung des Behälters liegend über die jeweils kolbenstangenseitig und gehäuseseitig angeordneten Drehpunkte eben jene mittig angeordnete Traverse mit der beweglichen Klappe verbinden. Dabei nimmt die Achse der beiden Drehpunkte, über die die zwei hydraulischen Arbeitszylinder mit der Klappe verbunden sind, gegenüber der den Drehpunkt der beweglichen Klappe bildenden Achse einen solchen Abstand ein, daß die bewegliche Klappe bei Beaufschlagung der beiden hydraulischen Arbeitszylinder den kastenförmigen Behälter öffnet oder schließt.

Der kastenförmige Behälter ist seinerseits in der Weise auf einem aus Profilen gebildeten Gestell befestigt, daß dieser um eine an der Unterseite desselben quer verlaufende Achse schwenkbar gelagert ist, wobei die Schwenkbewegung mittels zwei weiterer, diesmal an den Seitenwänden angreifender hydraulischer Arbeitszylinder bewirkt wird.

Erfindungswesentlich ist nunmehr, daß an den im Bereich der beweglichen Klappe endenden Behälterboden eine über nahezu die gesamte Behälterbreite verlaufende Wasseraufnahmeeinrichtung angeordnet ist, deren Besonderheit darin besteht, daß diese jeweils stirnseitig mittels zweier eine Schwingbewegung ausführender Koppelglieder mit dem Behälter verbunden ist.
Erfindungswesentlich ist weiterhin, daß wenigstens ein einziger hydraulischer Arbeitszylinder zwischen der Wasseraufnahmeeinrichtung und der Unterseite des Behälters beweglich eingehängt ist und daß eine der die Ablaufrinne bildenden langen Seiten der Wasseraufnahmeeinrichtung bezüglich der Ablaufkante des Behälters schräg angeordnet ist und in eine das Wasser ableitende Ablauföffnung mündet.

Die Funktionsweise der erfinderischen Umladeeinheit ist nun die, daß das durchnäßte Kehrgut in der Ausgangsstellung zunächst auf dem zu etwa einem Drittel abgewinkelten Teil seiner Bodenfläche aufliegt. Alsdann wird der Behälter in eine solche Schräglage geschwenkt, daß der zwei Drittel der Länge des Behälterbodens ausmachende Teil in eine bis zu 5 Grad über die Horizontale hinaus abweichende Schräge gebracht wird. Bewirkt wird dies dadurch, daß die beiden seitlich des Behälters angeordneten hydraulischen Arbeitszylinder beaufschlagt werden, wodurch der auf dem Gestell gelagerte Behälter die Drehbewegung um die unter dem Behälter verlaufende horizontale Achse vollführt. Auf diese Weise kann das im Kehrgut vorhandene Wasser in Richtung der an der Stirnseite angeordneten Wasserauffangeinrichtung fließen. Durch die Veränderung der Stellung der stirnseitig des Behälters angeordneten Klappe kann der Durchflußspalt für das Wasser in der Weise reguliert werden, daß keine größeren Bestandteile des Kehrgutes in die Wasserablaufeinrichtung gelangen. Dadurch, daß die Dosierklappe in einiger Entfernung vom Einfüllbereich des Kehrgutes angeordnet ist, erfolgt eine Beruhigung des sich in Richtung der Dosierklappe bewegenden Wassers, so daß sich die im Wasser enthaltenen Schwebeteilchen auf dem als Entwässerungsstrecke vorgesehenen Teil des Behälterbodens absetzen können. Die Wasseraufnahmeeinrichtung wurde dabei zuvor durch Beaufschlagung der beiden seitlich angeordneten hydraulischen Arbeitszylinder und das dadurch verursachte Nachvornschwenken der beiden Koppelglieder in eine solche Position unter die entlang der offenen Stirnseite des Behälters verlaufenden Kante gebracht, daß das Wasser von der Wasseraufnahmeeinrichtung aufgefangen wird und seitlich abfließen kann.

Nachfolgend soll die Erfindung an einem Ausführungsbeispiel näher erläutert werden:

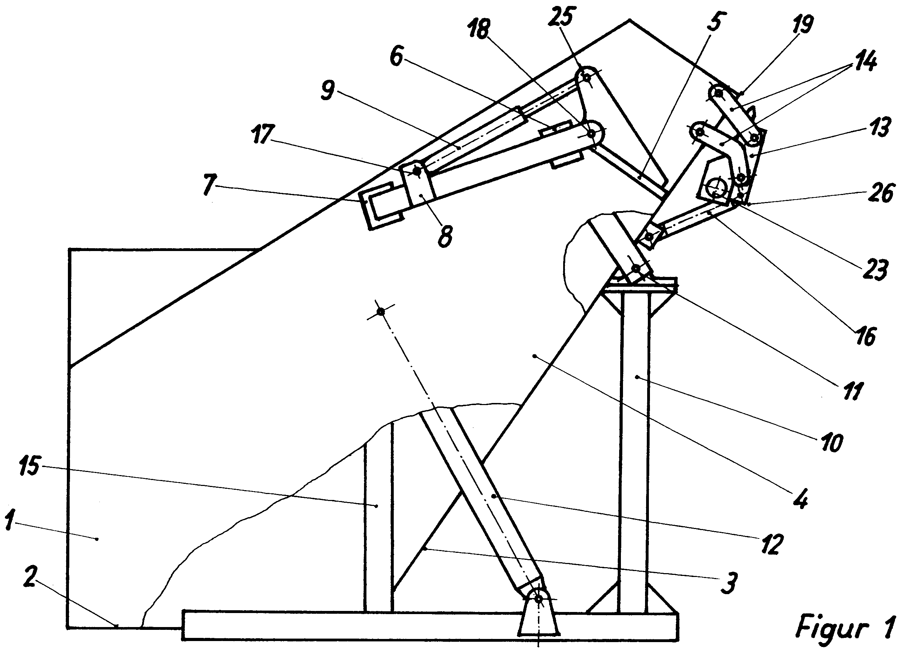

Figur 1 zeigt die erfindungsgemäße Umladeeinrichtung mit Entwässerungsvorrichtung, bestehend aus dem nach oben hin offenen und durch mehrere Profile (15) verstärkten Behälter 1, welcher zwei glattflächige Bodenflächen 2,3 aufweist, wobei die ein Drittel der Gesamtbodenfläche ausmachende Bodenfläche 2 mit der zwei Drittel der Gesamtbodenfläche ausmachenden Bodenfläche 3 einen Winkel von etwa 120 Grad bildet. Stirnseitig weist der Behälter 1 eine Klappe 5 auf, die an einer den Behälter 1 quer durchlaufenden, mit den Seitenwänden 4 verschweißten Traverse 6 schwenkbar um die Achse 18 gelagert ist. Auf eine zweite mit den Seitenwänden 4 in ähnlicher Weise verschweißten Traverse 7 sind zwei Lagerböcke 8 aufgesetzt. Zwischen jeweils einem dieser Lagerböcke 8 und der jeweils über ihren Drehpunkt 18 nach oben hinausragenden Verlängerung der Klappe 5 ist ein weiterer hydraulischer Arbeitszylinder 9 in der Weise angebracht, daß dieser zylinderseitig, drehbar um die Achse 17, mit dem Lagerbock 8 und kolbenseitig, drehbar um die Achse 25, mit der Klappe 5 verbunden ist.
Unter der entlang der offenen Stirnseite des Behälters 1 verlaufenden Kante 19 ist eine Wasserauffangeinrichtung 13 dergestalt angeordnet, daß diese jeweils stirnseitig an zwei annähern gleichlangen Koppelgliedern 14 schwenkbar befestigt ist, wobei zwischen der Wasserauffangeinrichtung 13 und dem Behälter 1 ein weiterer hydraulischer Arbeitszylinder 16 angeordnet ist. Der Behälter 1 ist seinerseits auf dem Gestell 10, drehbar um die Achse 11 gelagert. Seitlich des Behälters 1 sind zwei hydraulische Arbeitszylinder 12 in der Weise schwenkbar angeordnet, daß diese sich zylinderseitig auf dem Gestell 10 abstützen und kolbenseitig mit den Seitenwänden 4 des Behälters 1 drehbar verbunden sind.

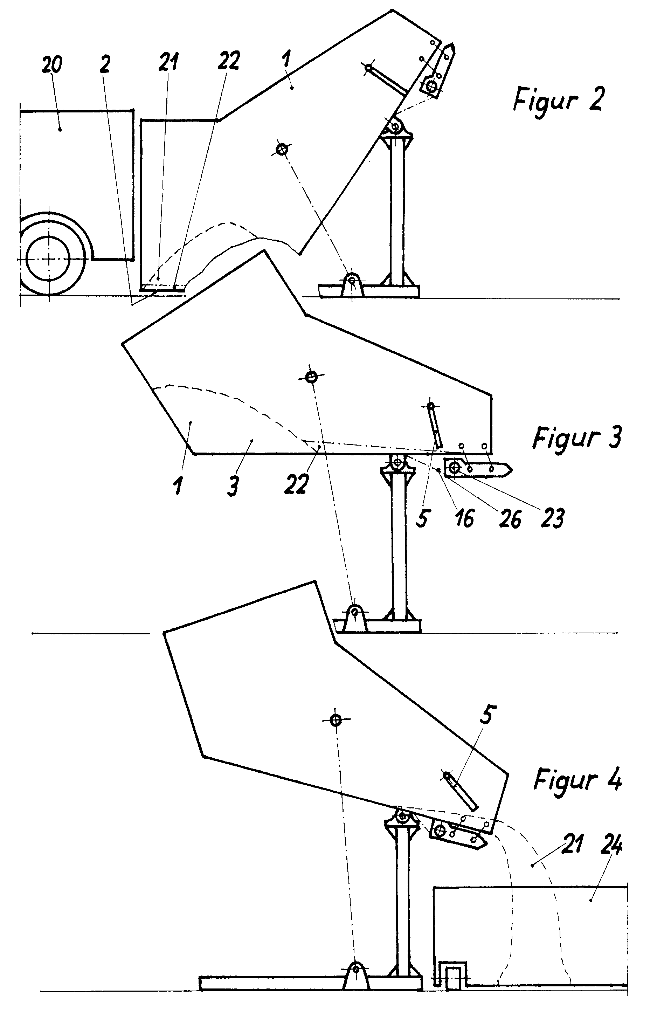

Die im Ausführungsbeispiel beschriebene Umladeeinrichtung funktioniert dabei, gemäß der Darstellungen in Figur 2, in der Weise, daß ein Straßenkehrfahrzeug 20 heckseitig an den in der Ausgangsstellung verharrenden Behälter 1 der Umladeeinrichtung gefahren wird. Das anschließend in den Behälter 1 entleerte Kehrgut 21 enthält in größerer Menge Feuchtigkeit, die sich in Form von verschmutztem und verunreinigtem Wasser 22 auf der Bodenfläche 2 des Behälters 1 ansammelt.

Durch Schwenken des Behälters 1 in die in der Figur 3 dargestellte Stellung fließt das Wasser 22 in Richtung der nach Betätigen der beiden hydraulischen Arbeitszylinder 9 nur einen geringen Spalt mit dem Bodenblech 3 bildenden Klappe 5 ab und wird von der durch die hydraulischen Arbeitszylinder 16 in Ausfahrstellung gebrachte Wasserauffangeinrichtung 13 aufgefangen. Je nach Kehrgutzusammensetzung und Wasseranteil kann eine Beruhigungsphase eingelegt werden, bevor der Behälter 1 weiter geschwenkt wird.
Aus der Wasserauffangeinrichtung 13 wird das Wasser 22 entlang der schräg angeordneten, eine Ablaufrinne (26) bildenden langen Seite über einen stirnseitig in dieselbe mündenden Ablauf 23 abgeleitet und umweltverträglich entsorgt.

Figur 4 schließlich zeigte das Umfüllen des nunmehr nur noch einen gerigen Feuchtigkeitsanteil enthaltenden Kehrgutes 21 von der erfindungsgemäßen Umladeeinrichtung in einen stirnseitig derselben bereitstehenden quer verfahrbaren großvolumigen Rollcontainer 24, indem die Klappe 5 geöffnet wird. Dabei wird die Klappe 5 in der Weise gesteuert, daß ein Dosieren des Entleerens ermöglicht wird, wodurch der Schüttgutstrom reguliert wird und ein Überladen des Rollcontainers 24 vermieden werden kann.
Nach Aufnahme von etwa vier Ladungen Kehrgut 21 wird der großvolumige Rollcontainer 24 seinerseits in einem einzigen Transportvorgang zur nächstliegenden Deponie gefahren, wo eine umweltverträgliche Einlagerung des Kehrgutes 21 erfolgt.

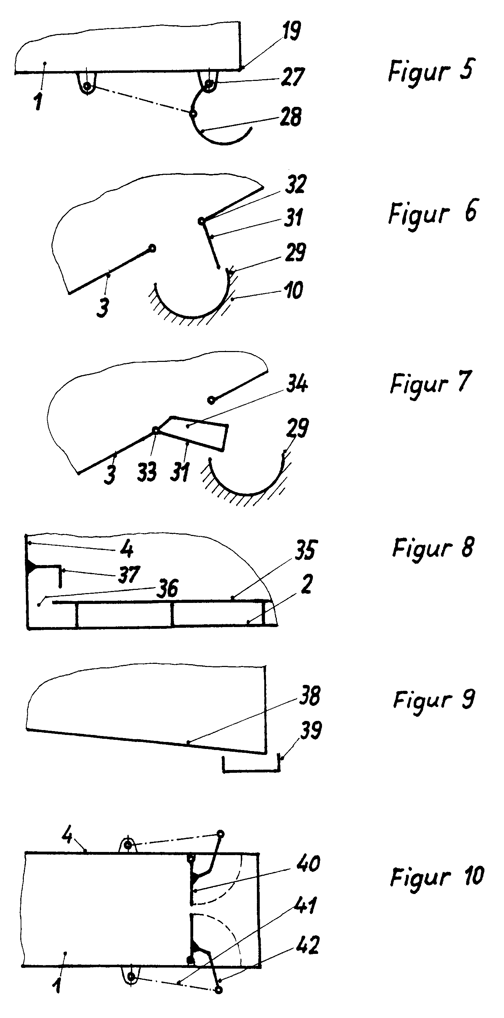

Eine Reihe weiterer Möglichkeiten der Gestaltung der Wasserablaufeinrichtung sollen an nachfolgenden Ausführungsbeispielen, dargestellt in den Figuren 5 bis 9 erläutert werden:
Figur 5 zeigt die Wasserablaufeinrichtung in Form einer halbrunden Rinne 28, welche im Bereich der Ablaufkante 19 des Behälters 1, drehbar um die Achse 27 gelagert ist.
Figur 6 zeigt die Wasserablaufeinrichtung ebenfalls in Form einer halbrunden Rinne 29, wobei diese jedoch fest mit dem Gestell 10 verbunden ist. Über dieser Rinne 29 ist im Bereich des Bodenbleches 3 des Behälters 1 eine mittels eines hydraulischen Arbeitszylinders nach außen um ihre horizontale Oberkante 32 schwenkbare Klappe 31 angeordnet.
Figur 7 zeigt, angeordnet über der halbrunden Rinne 29, ebenfalls eine mittels hydraulischen Arbeitszylinders schwenkbare Klappe 31, diesmal jedoch entlang ihrer längs verlaufenden Unterkante 33 mit dem Bodenblech 3 verbunden. Jeweils stirnseitig ist diese Klappe mit einem rechtwinklig aufgebogenen, ein seitliches Herunterlaufen des Wasser verhindernden Leitblech 34 versehen.
Figur 8 zeigt eine Wasserablaufeinrichtung in Form eines über der Bodenfläche 2 angeordneten weiteren Bodenbleches 35, wobei sich zwischen diesem und der Seitenwand 4 ein das Wasser ableitender Spalt 36 bildet, welcher von einem darüber angeordneten, mit der Seitenwand 4 verschweißten, nach unten weisenden L-Profil 37 überdeckt wird.
Figur 9 schließlich zeigt anstelle des Behälterbodens 2 einen geneigten Behälterboden 38 mit einer darunter angeordneten Ablaufrinne 39.

Ein weiteres Beispiel der Möglichkeit der Gestaltung der das Kehrgut freigebenden Klappe 5 ist in Figur 10 dargestellt. Danach sind stirnseitig des Behälters 1 zwei gleichgroße Klappen 40 in der Weise angeordnet, daß diese um eine vertikal innerhalb des Behälters und entlang der Seitenwand 4 verlaufenden Achse drehbar gelagert sind und mittels eines jeweils außerhalb an der Seitenwand 4 des Behälters 1 befestigten hydraulischen Arbeitszylinders 41 bewegt werden.

## Patentansprüche

1. Umladeeinrichtung mit Entwässerungsvorrichtung für Schüttgut, vorzugsweise geeignet zum Umladen und Entwässern des von öffentlichen Verkehrswegen zusammengetragenen Kehrgutes, **dadurch gekennzeichnet**, daß die Umladeeinrichtung aus einem nach oben hin offenen kastenförmigen Behälter (1) besteht,
- dessen Boden (3) glattflächig und zu etwa einem Drittel (2) mit 120 Grad abgewinkelt ist,
- dessen Stirnseite von einer Klappe (5) gebildet wird, die an einer den Behälter (1) im oberen Bereich quer durchlaufenden, die Seitenwände (4) miteinander verbindenden Traverse (6), längs derselben schwenkbar, befestigt ist,
- der unterhalb der des abgewinkelten Bodenbleches (2) gegenüberliegenden Stirnseite eine vor die Ablaufkante (19) schwenkbare Wasserauffangeinrichtung (13) aufweist und
- der schwenkbar auf einem Gestell (10) angeordnet ist.

2. Umladeeinrichtung nach Anspruch 1, **dadurch gekennzeichnet**, daß die Klappe (5) in der Weise durch mindestens einen hydraulischen Arbeitszylinder (9) bewegt wird, daß dieser sowohl kolbenseitig als auch gehäuseseitig drehbar zwischen der Klappe (5) und einer weiteren den Behälter (1) quer durchlaufenden Traverse (7) aufgehängt ist, wobei der klappenseitige Drehpunkt (18) des Arbeitszylinders (9) längs einer zur Achse (18) der Klappe (5) parallel verlaufenden Horizontalen (25) liegt.

3. Umladeeinrichtung nach Anspruch 1, **dadurch gekennzeichnet**, daß die schwenkbare Wasseraufnahmeeinrichtung (13) mit dem Behälter (1) über jeweils zwei gleichlange, stirnseitig angeordnete, eine Schwingbewegung ausführende Koppelglieder (14) verbunden ist, daß weiterhin zwischen der Wasseraufnahmeeinrichtung (13) und dem Behälter mindestens ein hydraulischer Arbeitszylinder (16) jeweils kolbenseitig und gehäuseseitig in der Weise drehbar aufgehängt ist, daß bei dessen Beaufschlagung eine Schwingbewegung der Wasseraufnahmeeinrichtung (13) erfolgt und daß schließlich die die Ablaufrinne bildende Vorderkante (26) der Wasseraufnahmeeinrichtung (13) bezüglich der Ablaufkante (19) des Behälters (1) schräg angeordnet und stirnseitig mit einer Ablauföffnung (23) versehen ist.

4. Umladeeinrichtung nach Anspruch 1, **dadurch gekennzeichnet**, daß die Wasseraufnahmeeinrichtung auch
- die Form einer halbrunden Rinne (28) aufweisen kann, welche ihrerseits um eine vor der Kante (19) angeordneten Achse (27) drehbar gelagert ist,
- die Form einer halbrunden Rinne (29) aufweisen kann, welche in der Weise fest mit dem Gestell (10) verbunden ist, daß diese unterhalb einer im Bereich der Bodenfläche (3) befindlichen Klappe (31) angeordnet ist, wobei die Klappe (31) ihrerseits entweder längs ihrer horizontalen Oberkante (32) oder mit ihrer horizontalen Unterkante (33) nach außen drehbar am Behälterboden (3) befestigt ist, wobei die Klappe (31) im letzteren Falle jeweils stirnseitig mit einem rechtwinklig aufgebogenem Leitblech (34) versehen ist,
- die Form eines über der Bodenfläche (2) angeordneten weiteren Bodenbleches (35) aufweisen kann, wobei sich zwischen diesem (35) und der Seitenwand (4) des Behälters (1) ein Spalt (36) bildet, welcher von einem darüber angeordneten, mit der Seitenwand (4) verbundenem, nach unten weisenden L-Profil (37) überdeckt wird,
- anstelle des Behälterbodens (2) einen geneigten Behälterboden (38) mit einer darunter angeordneten Ablaufrinne (39) aufweisen kann.

5. Umladeeinrichtung nach Anspruch 1, **dadurch gekennzeichnet**, daß stirnseitig des Behälters (1) auch zwei annähernd gleichgroße Klappen (40) in der Weise angeordnet sein können, daß diese jeweils um eine vertikal innerhalb des Behälters (1) und entlang der Seitenwand (4) verlaufende Achse drehbar gelagert sind und ein jeweils außerhalb an der Seitenwand (4) befestigter hydraulischer Arbeitszylinder (41) über ein Gestänge (42) mit der jeweiligen Klappe (40) verbunden ist.

6. Umladeeinrichtung nach Anspruch 1, **dadurch gekennzeichnet**, daß der Behälter (1) in der Weise mit dem Gestell (10) verbunden ist, daß dieser um eine quer verlaufende Achse (11) schwenkbar gelagert ist, wobei vorzugsweise zwei hydraulische Arbeitszylinder (12) zwischen dem Gestell (10) und dem Behälter (1) kolbenseitig und gehäuseseitig drehbar angeordnet sind.

7. Umladeeinrichtung nach Anspruch 1 bis 6, **dadurch gekennzeichnet**, daß die den Drehpunkt des Behälters (1) bildende Achse (11) vorzugsweise an der Unterseite des Behälters verläuft und in der Beladestellung die quer die Achse (11) schneidende Senkrechte zu der den abgewinkelten Teil (2) der Bodenfläche des Behälters (1) bildenden Ebene im rechten Winkel steht.

8. Verfahren zur Entwässerung, vorzugsweise des von öffentlichen Verkehrswegen mittels eines bekanntermassen für die Sauberhaltung geeigneten Straßenkehrfahrzeuges (20) zusammengetragenen Kehrgutes (21), **dadurch gekennzeichnet,** daß das Kehrgut (21) zunächst in den Behälter (1) einer Umladeeinrichtung entleert und dort entwässert wird, bevor es in einen mehrere solcher Ladungen Kehrgut (21) aufnehmenden Rollcontainer (24) übergeben und mittels desselben zur Deponie transportiert wird.

9. Verfahren nach Anspruch 8, **dadurch gekennzeichnet**, daß das bei der Entwässerung des Kehrgutes (21) zurückbleibende Wasser (22) nach bekannten Verfahren umweltgerecht entsorgt wird.
